# EUROPÄISCHE PATENTSCHRIFT

(11) **EP 3 328 684 B1**
(45) Veröffentlichungstag und Bekanntmachung des Hinweises auf die Patenterteilung: **27.11.2019**
(21) Anmeldenummer: 16741313.7
(22) Anmeldetag: 21.07.2016
(51) Int. Cl.: B60N 2/20, E05F 15/73, B60R 25/20, B60R 5/04

(54) **STEUERSYSTEM FÜR EINE MOTORISCH VERSTELLBARE LADERAUMVORRICHTUNG EINES KRAFTFAHRZEUGS**
CONTROL SYSTEM FOR A MOTOR-ADJUSTABLE LOAD COMPARTMENT DEVICE OF A MOTOR VEHICLE
SYSTÈME DE COMMANDE D'UN DISPOSITIF DE COMPARTIMENT DE CHARGEMENT DÉPLAÇABLE DE MANIÈRE MOTORISÉE D'UN VÉHICULE AUTOMOBILE

(30) Priorität: 31.07.2015 DE 102015112589
(43) Veröffentlichungstag der Anmeldung: 06.06.2018
(73) Patentinhaber: Brose Fahrzeugteile GmbH & Co. Kommanditgesellschaft, Bamberg, 96052 Bamberg (DE)
(72) Erfinder: SPANGLER, Martin, 93164 Laaber (DE); KIESER, Sandra, 96450 Coburg (DE); UEBEL, Wolfgang, 96479 Weitramsdorf (DE)
(74) Vertreter: Gottschald Patentanwälte Partnerschaft mbB
(86) Internationale Anmeldenummer: PCT/EP2016/067358
(87) Internationale Veröffentlichungsnummer: WO 2017/021158

(56) Entgegenhaltungen:
- DE-A1-102013 114 883
- DE-A1-102014 010 471
- DE-B3-102015 014 211

## Beschreibung

Die Erfindung betrifft ein Steuersystem für eine motorisch verstellbare Laderaumvorrichtung eines Kraftfahrzeugs gemäß dem Oberbegriff von Anspruch 1, ein Kraftfahrzeug mit einem solchen Steuersystem gemäß Anspruch 15 sowie ein Verfahren für die Ansteuerung einer motorisch verstellbaren Laderaumvorrichtung eines Kraftfahrzeugs gemäß dem Oberbegriff von Anspruch 16.

Die Betätigung eines Verschlusselements eines Kraftfahrzeugs durch die berührungslose Erfassung von Bedienereignissen hat in den letzten Jahren zunehmend Eingang in Mittel- und Oberklassenfahrzeuge gefunden. Dabei kommt der Bediensituation besondere Bedeutung zu, in der der Bediener des Kraftfahrzeugs keine Hand frei hat, um einen elektronischen Fahrzeugschlüssel o. dg1. zu betätigen. Dies ist beispielsweise der Fall, wenn der Bediener das Kraftfahrzeug mit eine sperrigen Gegenstand beladen möchte.

Bei dem bekannten Steuersystem (DE 10 2013 114 883 A1), von dem die Erfindung ausgeht, ist die berührungslose Erfassung eines Bedienereignisses in Form eines Bediener-Bewegungszyklus, nämlich einer Fußbewegung des Bedieners, vorgesehen. Hierfür ist im Stoßfänger des Kraftfahrzeugs ein kapazitiv messender Abstandssensor angeordnet, der von einer Steuerungsanordnung entsprechend überwacht wird. Bei der Erfassung des Bedienereignisses wird die Heccklappe der dortigen Laderaumvorrichtung motorisch in Öffnungsrichtung verstellt. Damit ist es dem Bediener möglich, auch ohne den Einsatz seiner Hände das Öffnen und ggf. das Schließen der Heckklappe auszulösen.

Bei dem bekannten Steuersystem ist nur ein Teil der Laderaumvorrichtung, nämlich die Heckklappe, motorisch verstellbar ausgebildet. Andere Bestandteile der Laderaumvorrichtung, beispielsweise ein Laderaumboden, eine Rücksitzbank, eine Durchlade o. dgl. sind regelmäßig manuell verstellbar.

Die mit der Freihandbedienung des bekannten Steuersystems erzielbare Steigerung des Bedienkomforts findet ihre Grenze in Situationen, in denen besonders sperrige Gegenstände transportiert werden müssen, zu deren Beladung eine Erweiterung des Laderaums vorgenommen werden muss. Hier sind regelmäßig manuelle Eingriffe insbesondere zum Umlegen der Rückenlehne einer hinteren Sitzreihe o. dg1. erforderlich. Der Benutzer kommt nicht umhin, für die Erweiterung des Laderaums den zu beladenden, sperrigen Gegenstand abzulegen. Dies ist wiederum mit einer Beeinträchtigung des Bedienkomforts verbunden.

Der Erfindung liegt das Problem zugrunde, das bekannte Steuersystem derart auszugestalten und weiterzubilden, dass dessen Bedienkomfort gesteigert wird.

Das obige Problem wird bei einem Steuersystem gemäß dem Oberbegriff von Anspruch 1 durch die Merkmale des kennzeichnenden Teils von Anspruch 1 gelöst.

Wesentlich ist die grundsätzliche Überlegung, dass das an sich der Betätigung des Verschlusselements dienende Steuersystem auch für die motorische Erweiterung des Laderaums genutzt werden kann, sofern die Laderaumvorrichtung mindestens eine entsprechend motorisch verstellbare Laderaumkomponente wie eine motorisch verstellbare Sitzanordnung o. dgl. aufweist.

Entsprechend wird zunächst vorgeschlagen, die Laderaumvorrichtung mit mindestens einer motorisch verstellbaren Laderaumkomponente wie einer obigen Sitzanordnung auszustatten. Weiter wird vorgeschlagen, dass die Steuerungsanordnung bei der auf den Bedienereignissensor zurückgehenden Erfassung eines dem primären Bedienereignis nachfolgenden, sekundären Bedienereignisses mindestens eine solche Laderaumkomponente motorisch verstellt. Dabei handelt es sich bei dem primären Bedienereignis um das Bedienereignis, mit welchem die Betätigung des Verschlusselements auslösbar ist.

Die vorschlagsgemäße Lösung ist nicht nur kostengünstig umsetzbar, sondern führt zu einer deutlichen Steigerung des Bedienkomforts, da der Bediener die Möglichkeit hat, durch vorbestimmte Bediener-Bewegungszyklen nicht nur das Verschlusselement zu betätigen, sondern insbesondere den Laderaum zu erweitern.

Mit der bevorzugten Ausgestaltung gemäß Anspruch 2 lassen sich Fehlbetätigungen leicht ausschließen, indem sekundäre Bedienereignisse, die zeitlich weit entfernt zu dem primären Bedienereignis liegen, ausgeblendet werden. Mit der weiter bevorzugten Ausgestaltung gemäß Anspruch 3 lassen sich eventuell drohende Kollisionen mit Gegenständen und/oder Fahrzeuginsassen effektiv vermeiden.

Bei den besonders bevorzugten Ausgestaltungen gemäß den Ansprüchen 4 und 5 handelt es sich bei der verstellbaren Laderaumkomponente um eine Sitzanordnung, wobei je nach Anwendungsfall unterschiedliche Bestandteile der Laderaumkomponente motorisch verstellbar sind. Damit lässt sich bei den meisten Kraftfahrzeugen eine einfache Erweiterung des Laderaums erzielen.

Grundsätzlich kann die vorschlagsgemäße Verstellung der Laderaumkomponente auch der Vereinfachung des Beladens dienen, wie noch erläutert wird. Bei der besonders bevorzugten Ausgestaltung gemäß Anspruch 6 wird die Verstellung der Laderaumkomponente allerdings so vorgenommen, dass der Laderaum wie oben angesprochen erweitert wird.

Eine besonders einfach zu realisierende und gleichzeitig intuitiv zu bedienende Variante besteht gemäß Anspruch 9 darin, dass die Bediener-Bewegungszyklen des primären Bedienereignisses und des sekundären Bedienereignisses identisch zueinander definiert sind.

Bei den Bediener-Bewegungszyklen kann es sich um alle möglichen Bewegungszyklen handeln. Speziell für eine Freihandbedienung hat sich allerdings eine Fußbewegung gemäß Anspruch 10 oder 11 bewährt.

Eine hohe Flexibilität lässt sich mit den Ansprüchen 12 und 13 erzielen, indem unterschiedliche Varianten des sekundären Bedienereignisses definiert sind, die zu unterschiedlichen Varianten der Verstellung der betreffenden Laderaumkomponente führen. Dadurch lassen sich über das sekundäre Bedienereignis beispielweise gezielt linke und rechte Teilrückenlehnen einer Sitzanordnung verstellen.

Nach einer weiteren Lehre gemäß Anspruch 15, der eigenständige Bedeutung zukommt, wird ein Kraftfahrzeug mit einer motorisch verstellbaren Laderaumvorrichtung und mit einem der Laderaumvorrichtung zugeordneten, vorschlagsgemäßen Steuersystem beansprucht.

Wesentlich nach der weiteren Lehre ist die Tatsache, dass sich der Bedienkomfort für das Kraftfahrzeug insgesamt bei geringem zusätzlichem Aufwand erhöht, indem neben der berührungslosen Betätigung des Verschlusselements, insbesondere der Heckklappe, auch die Laderaumvorrichtung motorisch verstellbar ist, insbesondere um den Laderaum des Kraftfahrzeugs zu erweitern. Im Übrigen darf auf alle Ausführungen zu dem vorschlagsgemäßen Steuersystem verwiesen werden.

Nach einer weiteren Lehre gemäß Anspruch 16, der ebenfalls eigenständige Bedeutung zukommt, wird ein Verfahren für die Ansteuerung einer motorisch verstellbaren Laderaumvorrichtung eines Kraftfahrzeugs beansprucht.

Wesentlich nach der weiteren Lehre ist, dass bei der Erfassung eines dem primären Bedienereignis nachfolgenden, sekundären Bedienereignisses mindestens eine besagte Laderaumkomponente motorisch verstellt wird. Auch hier finden sich die wesentlichen Vorteile in einer Steigerung des Bedienkomforts, die sich mit geringem Aufwand umsetzen lässt. Im Übrigen darf auf die Ausführungen zu der Funktionsweise des vorschlagsgemäßen Steuersystems verwiesen werden.

Im Folgenden wird die Erfindung anhand einer lediglich ein Ausführungsbeispiel darstellenden Zeichnung näher erläutert. In der Zeichnung zeigt
- Fig. 1: den Heckbereich eines vorschlagsgemäßen Kraftfahrzeugs mit einem vorschlagsgemäßen Steuersystem,
- Fig. 2: den Heckbereich des Kraftfahrzeugs gemäß Fig. 1 a) nach der Erfassung des primären Bedienereignisses und b) nach der Erfassung des sekundären Bedienereignisses und
- Fig. 3: den Heckbereich des Kraftfahrzeugs gemäß Fig. 1 a) nach Erfassung des sekundären Bedienereignisses in einer zweiten Ausführungsform und b) nach Erfassung des sekundären Bedienereignisses in einer dritten Ausführungsform.

Das vorschlagsgemäße Steuersystem 1 dient der Ansteuerung einer motorisch verstellbaren Laderaumvorrichtung 2 eines Kraftfahrzeugs 3. Die Laderaumvorrichtung 2 weist ein motorisch verstellbares Verschlusselement 4 auf, das hier und vorzugsweise als Heckklappe ausgestaltet ist, der für ihre motorische Verstellung ein Antrieb 4a zugeordnet ist.

Der Begriff "Verschlusselement" ist vorliegend weit auszulegen. Er umfasst beispielsweise Türen, insbesondere Schiebetüren, Klappen, insbesondere oben angesprochene Heckklappen, Heckdeckel, Motorhauben o. dgl. eines Kraftfahrzeugs. Alle Ausführungen zu einer Heckklappe gelten für alle anderen Arten von Verschlusselementen entsprechend.

Der Begriff "motorische Verstellung" ist vorliegend ebenfalls weit auszulegen und umfasst jedwede mit der betreffenden Komponente in Zusammenhang stehende Verstellung. Er umfasst beispielsweise sowohl eine motorische Bewegung der zu verstellenden Komponente oder eines Teils davon als auch lediglich eine motorische Freigabe, insbesondere Entriegelung der betreffenden Komponente, so dass eine manuelle oder federgestützte Bewegung der Komponente freigegeben wird.

Zur berührungslosen Erfassung von Bedienereignissen in Form von Bediener-Bewegungszyklen ist ein Bedienereignissensor 5 vorgesehen, bei dem es sich hier und vorzugsweise um einen Abstandssensor handelt. Der Bedienereignissensor 5 kann eine Mehrzahl von Sensorkomponenten umfassen, wie noch erläutert wird.

Es ist weiter eine Steuerungsanordnung 6 vorgesehen, die Bestandteil einer zentralen Fahrzeugsteuerung sein kann. Hier und vorzugsweise handelt es sich bei der Steuerungsanordnung 6 jedoch um eine dezentrale Steuerungsanordnung, die ggf. mit einer zentralen Fahrzeugsteuerung kommuniziert.

Die Steuerungsanordnung 6 überwacht den Bedienereignissensor 5 daraufhin, ob ein vorbestimmtes Bedienereignis vorliegt. Bei der Erfassung eines solchen vorbestimmten Bedienereignisses wird die Laderaumvorrichtung 2 in ebenfalls vorbestimmter Weise motorisch verstellt.

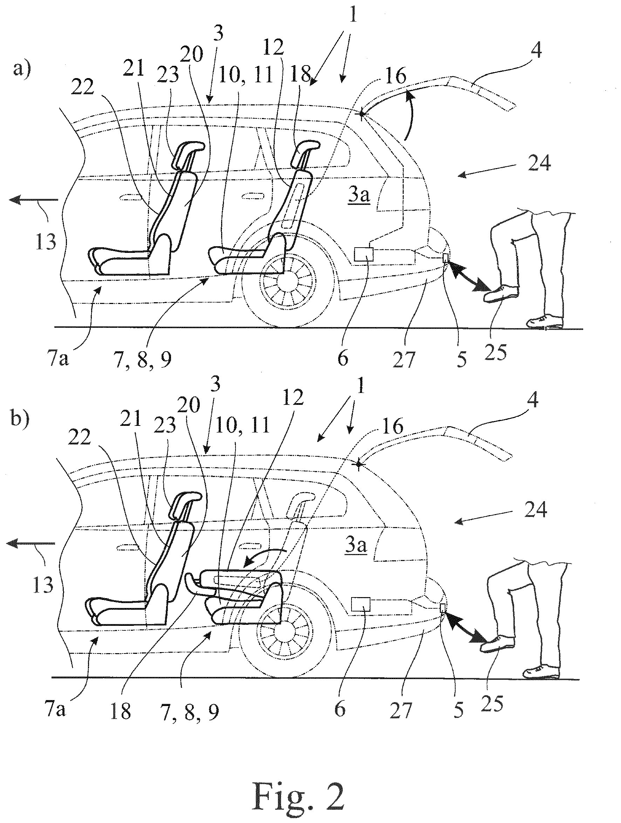

Im Einzelnen verstellt die Steuerungsanordnung 6 bei der auf den Bedienereignissensor 5 zurückgehenden Erfassung eines primären Bedienereignisses das Verschlusselement 4 motorisch in Öffnungsrichtung, wie in Fig. 2a gezeigt ist.

Es darf darauf hingewiesen werden, dass durch die vorschlagsgemäße Bedienereignisüberwachung auch eine motorische Verstellung des Verschlusselements 4 in Schließrichtung möglich ist. Grundsätzlich ist das Verschlusselement 4 zwischen einer Schließstellung und einer Offenstellung motorisch verstellbar, wobei jedenfalls eine Verstellung des Verschlusselements 4 aus der Schließstellung heraus auf die Erfassung des primären Bedienereignisses hin in Öffnungsrichtung, insbesondere in die Offenstellung, verstellt werden kann. Denkbar ist aber auch, dass eine motorische Verstellung des Verschlusselements 4 in Schließrichtung auf die Erfassung eines vorbestimmten Bedienereignisses hin erfolgt, was vorliegend allerdings von untergeordneter Bedeutung ist.

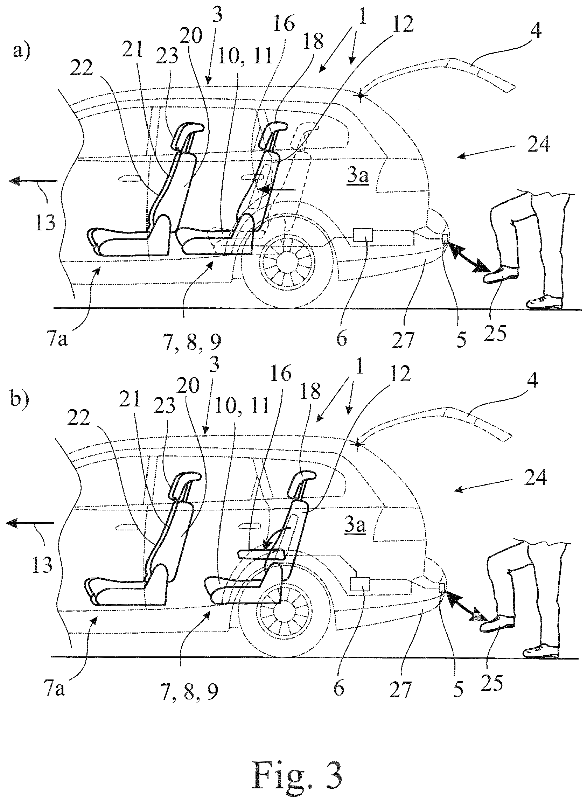

Wesentlich ist nun, dass die Laderaumvorrichtung 2 mindestens eine motorisch verstellbare Laderaumkomponente 7 aufweist, wobei die Steuerungsanordnung 6 bei der auf den Bedienereignissensor 5 zurückgehenden Erfassung eines dem primären Bedienereignis nachfolgenden, sekundären Bedienereignisses mindestens eine solche Laderaumkomponente 7 motorisch verstellt. Dies ist an insgesamt drei Ausführungsbeispielen in den Fig. 2b, 3a und 3b gezeigt. Die vorschlagsgemäße Verstellung der Laderaumkomponente 7 dient vorzugsweise der Erweiterung des Laderaums 3a des Kraftfahrzeugs 3, wie noch gezeigt wird.

Eine notwendige Bedingung für die vorschlagsgemäße Reaktion auf das Auftreten des primären Bedienereignisses und des sekundären Bedienereignisses besteht vorzugsweise darin, dass seitens der Steuerungsanordnung 6 das Vorhandensein eines elektronischen Fahrzeugschlüssels in der Nähe des Kraftfahrzeugs 3 detektiert wird. Die Steuerungsanordnung 6 löst vorzugsweise einen Sicherheitsdialog mit dem elektronischen Fahrzeugschlüssel aus, um zu ermitteln, ob der jeweilige elektronische Fahrzeugschlüssel und damit der den elektronischen Fahrzeugschlüssel tragende Bediener für das Öffnen des Kraftfahrzeugs authentifiziert ist.

Um eine unerwartete Reaktion des Steuersystems 1 auf ein Bedienereignis zu vermeiden, ist es vorzugsweise vorgesehen, dass die Steuerungsanordnung 6 die Laderaumkomponente 7 bei der Erfassung des sekundären Bedienereignisses nur unter der Bedingung verstellt, dass das sekundäre Bedienereignis innerhalb einer vorbestimmten Pausenzeit dem primären Bedienereignis nachfolgt. Ist die vorbestimmte Pausenzeit verstrichen, so führt das sekundäre Bedienereignis jedenfalls nicht zu der an sich diesem Bedienereignis zugeordneten Verstellung der Laderaumkomponente 7. Ggf. kann es vorgesehen sein, dass das sekundäre Bedienereignis dann lediglich das motorische Schließen des Verschlusselements 4 auslöst.

Eine vorschlagsgemäße, selbsttätige Verstellung einer Laderaumkomponente 7 ist grundsätzlich mit einem gewissen Risiko einer Kollision mit Gegenständen und/oder Fahrzeuginsassen und damit mit einem Risiko von Beschädigungen und/oder Verletzungen verbunden. Um dieses Risiko zu vermeiden, ist es vorzugsweise vorgesehen, dass die Steuerungsanordnung 6 die Laderaumkomponente 7 bei der Erfassung des sekundären Bedienereignisses zur Vermeidung von Kollisionen nur unter der Bedingung verstellt, dass von der Steuerungsanordnung 6 ein entsprechender Freigabezustand erfasst worden ist. Insbesondere umfasst diese Erfassung des Freigabezustands eine Abfrage mindestens eines Zustandssensors, der Aufschluss über eine drohende Kollision geben kann. Vorzugsweise findet hier ein Zustandssensor Anwendung, der ohnehin üblicherweise in einem modernen Kraftfahrzeug vorgesehen ist. In besonders bevorzugter Ausgestaltung umfasst die Erfassung des Freigabezustands eine Abfrage eines Sitzbelegungssensors und/oder eines Gurtschlosssensors und/oder eines Innenraumüberwachungssensors. Sofern sich aus der Abfrage des jeweiligen Zustandssensors eine eventuell anstehende Kollision ergibt, wird die Verstellung der jeweiligen Laderaumkomponente 7 von der Steuerungsanordnung 6 nicht ausgelöst. Vorzugsweise gibt die Steuerungsanordnung 6 dann ein entsprechendes, insbesondere akustisches, Warnsignal aus.

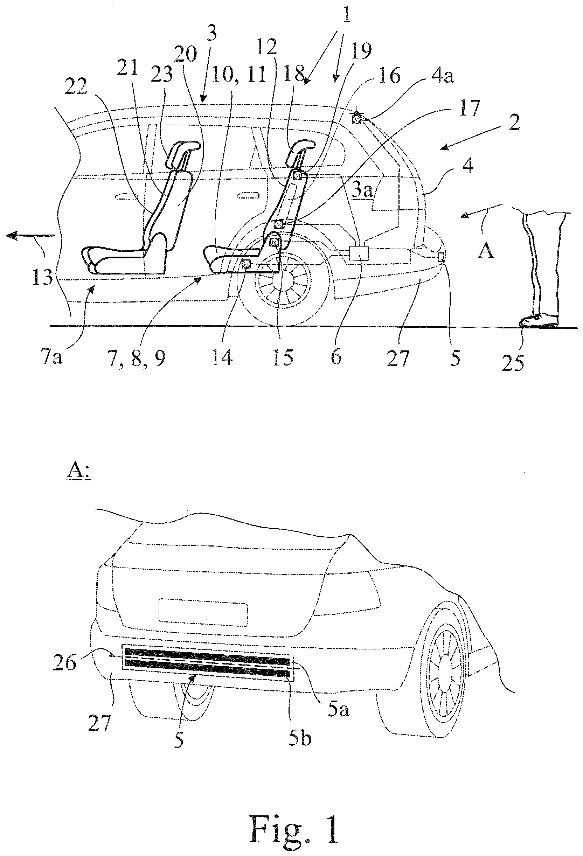

Für die mittels der Steuerungsanordnung 6 verstellbare Laderaumkomponente 7 sind zahlreiche Realisierungsmöglichkeiten denkbar. Bei dem dargestellten und insoweit bevorzugten Ausführungsbeispiel weist die Laderaumkomponente 7 eine Sitzanordnung 8 auf, bei der es sich weiter vorzugsweise um eine Sitzreihe 9 handelt. Die Sitzanordnung 8 weist ein Sitzteil 10, hier und vorzugsweise eine Sitzbank 11, sowie eine Rückenlehne 12 auf. Dabei ist es vorzugsweise so, dass die Sitzanordnung 8 insgesamt motorisch entriegelbar oder bewegbar ist. In beiden Fällen dient dies der Verstellung der Sitzanordnung 8 entlang der Fahrzeuglängsrichtung 13. Diese Verstellbarkeit kann grundsätzlich auch nur auf einen Teil der Sitzanordnung 8 beschränkt sein. Für die motorische Verstellung der Sitzanordnung 8 insgesamt ist ein motorischer Antrieb 14 vorgesehen, der in Fig. 1 gezeigt ist. Alle Antriebe sind vorliegend der Übersichtlichkeit halber nur in Fig. 1 dargestellt.

Alternativ oder zusätzlich kann die Rückenlehne 12 der Sitzanordnung 8 insgesamt oder abschnittsweise motorisch entriegelbar oder bewegbar sein. Hierbei geht es in erster Linie um ein Umklappen der Rückenlehne 12, wie der Übergang von Fig. 2a auf Fig. 2b zeigt. Hierfür ist die Sitzanordnung 8 mit einem entsprechenden Antrieb 15 ausgestattet.

Alternativ oder zusätzlich kann die Rückenlehne 12 mit einer Durchlade 16 ausgestattet sein, die ebenfalls motorisch entriegelbar oder bewegbar ist. Bei der Durchlade 16 handelt es sich vorzugsweise um eine Klappe, die im geöffneten Zustand eine Öffnung in der jeweiligen Rückenlehne 12 freigibt. Für die motorische Verstellung der Durchlade 16 ist diese vorzugsweise mit einem entsprechenden Antrieb 17 ausgestattet, der ebenfalls in Fig. 1 gezeigt ist.

Alternativ oder zusätzlich ist es vorzugsweise so, dass die Rückenlehne 12 mindestens eine Kopfstütze 18 aufweist, die motorisch entriegelbar oder bewegbar ist. Hierfür ist der Kopfstütze 18 ein Antrieb 19 zugeordnet.

Es darf darauf hingewiesen werden, dass die genannten Antriebe 14, 15, 17-19 je nach Anwendungsfall vorgesehen oder nicht vorgesehen sein können. Denkbar ist auch, dass zumindest einer der Antriebe zwei oder mehrere der jeweiligen motorischen Verstellungen übernimmt.

Es sind eine ganze Reihe besonders bevorzugter Möglichkeiten für die vorschlagsgemäße Verstellung der Sitzanordnung 8 denkbar, die im Folgenden anhand der Zeichnung erläutert werden.

Vorzugsweise wird die Sitzanordnung 8 insgesamt oder abschnittsweise bei der Erfassung des dem primären Bedienereignis nachfolgenden sekundären Bedienereignisses motorisch entriegelt oder bewegt. Die Entriegelung bewirkt vorzugsweise, dass die Sitzanordnung 8 manuell entlang der Fahrzeuglängsrichtung 13 verschiebbar ist. Bei der motorischen Entriegelung kann der zu beladende Gegenstand in den Laderaum 3a vorgeschoben werden, wodurch die entriegelte Sitzanordnung 8 entsprechend verschoben wird.

In einer weiter bevorzugten Ausgestaltung handelt es sich bei der vorschlagsgemäßen motorischen Verstellung der Sitzanordnung 8 allerdings um eine motorische Verstellung der Sitzanordnung 8 in Fahrzeuglängsrichtung 13, so dass sich der Laderaum 3 selbsttätig und ohne die Notwendigkeit einer bedienerseitigen Kraftwirkung erweitert (Fig. 3a). Die motorische Bewegung ist insbesondere vorteilhaft, da der Grad der Bewegung, also die Längsposition der Sitzanordnung 8 entlang der Fahrzeuglängsrichtung 13, von der Steuerungsanordnung 6 vorgegeben werden, also eingestellt werden kann.

Alternativ oder zusätzlich kann es vorgesehen sein, dass sich bei der Erfassung des dem primären Bedienereignis nachfolgenden sekundären Bedienereignisses die Steuerungsanordnung 6 die Rückenlehne 12 der Sitzanordnung 8 insgesamt oder abschnittsweise motorisch entriegelt oder bewegt. Die motorische Entriegelung bewirkt, dass die entriegelte Rückenlehne 12 manuell umgeklappt werden kann, so dass sich wiederum eine Erweiterung des Laderaums 3a ergibt. In besonders bevorzugter Ausgestaltung ist hier eine motorische Bewegung der Rückenlehne 12 vorgesehen, so dass sich der Laderaum 3a wiederum selbsttätig erweitert (Fig. 2b). Die motorische Bewegung, hier das motorische Umklappen, ist insbesondere vorteilhaft, da der Grad der Bewegung, also der Umklappwinkel, von der Steuerungsanordnung 6 wie oben vorgegeben werden kann.

Speziell beim Transport von länglichen Gegenständen kann es vorteilhaft sein, bei der Erfassung des dem primären Bedienereignis nachfolgenden sekundären Bedienereignisses die Durchlade 16 in der Rückenlehne 12 motorisch zu entriegeln oder zu bewegen. Ähnlich wie bei der Rückenlehne 12 ist es hier so, dass die Durchlade 16 nach der motorischen Entriegelung manuell umgeklappt werden kann, so dass der längliche Gegenstand durch die Rückenlehne 12 hindurchgeführt werden kann. Bei der motorischen Bewegung der Durchlade 16 ist es wiederum vorteilhafterweise so, dass von der Steuerungsanordnung 6 eine vorbestimmte Bewegung, insbesondere eine vorbestimmte Winkelstellung, vorgegeben werden kann (Fig. 3b).

Es kann auch vorteilhaft sein, dass bei der Erfassung des dem primären Bedienereignis nachfolgenden sekundären Bedienereignisses die mindestens eine Kopfstütze 18 motorisch entriegelt oder bewegt wird. Bei der motorischen Entriegelung der Kopfstütze 18 ist es vorzugsweise so, dass die Kopfstütze 18 nach ihrer Entriegelung federgetrieben in eine Parkstellung einfährt. Denkbar ist aber auch, dass die Kopfstütze 18 nach der motorischen Entriegelung manuell bewegbar ist. Auch hier ist es jedoch bevorzugt, dass die Kopfstütze 18 motorisch bewegt wird, so dass wiederum der Grad der Bewegung von der Steuerungsanordnung 6 vorgegeben werden kann (Fig. 2b).

In besonders bevorzugter Ausgestaltung werden bei der Erfassung des dem primären Bedienereignis nachfolgenden sekundären Bedienereignisses mindestens zwei Teilkomponenten 8-12, 16, 18 der Laderaumkomponente 7 motorisch verstellt. Die motorische Verstellung dieser Teilkomponenten kann gleichzeitig oder sequentiell erfolgen, wobei sich für die gleichzeitige Verstellung ein Zeitvorteil ergibt. In besonders bevorzugter Ausgestaltung ist es so, dass bei der Erfassung des dem primären Bedienereignis nachfolgenden sekundären Bedienereignisses die Bewegung der Rückenlehne 12, insbesondere das Umklappen der Rückenlehne 12, sowie die Bewegung der Kopfstütze 18, insbesondere das Einfahren der Kopfstütze 18, von der Steuerungsanordnung 6 ausgelöst wird. Dies lässt sich dem Übergang von Fig. 2a auf Fig. 2b entnehmen. Die zusätzliche Bewegung der Kopfstütze 18 stellt sicher, dass sich beim Umklappen der Rückenlehne 12 keine Kollision mit anderen im Kraftfahrzeug 3 befindlichen Teilkomponenten ergibt. Zusätzlich kann es vorgesehen sein, dass die Sitzanordnung 8 insgesamt motorisch verstellt wird, um den Laderaum 3a weiter zu vergrößern.

Wie oben angesprochen, ist die motorische Bewegung der Teilkomponenten 8-12, 16, 18 insoweit vorteilhaft, als der Grad der Bewegung von der Steuerungsanordnung 6 vorgegeben sein kann. Damit ist es beispielsweise auch möglich, die Sitzanordnung 8 lediglich so zu verstellen, dass der Laderaum 3a zwar erweitert wird, die Nutzbarkeit der Sitzanordnung 8 als Sitzgelegenheit für Fahrzeugpassagiere jedoch aufrechterhalten bleibt. Die motorische Verstellung kann in diesem Fall beispielsweise die Verstellung der Sitzanordnung 8 insgesamt in Fahrzeuglängsrichtung 13 und eine Verstellung der Rückenlehne 12 in nahezu vertikale Positionen umfassen.

Sofern zwei oder mehrere in Fahrzeuglängsrichtung 13 versetzt angeordnete Sitzreihen 9 vorgesehen sind (nicht dargestellt), verstellt die Steuerungsanordnung 6 bei der Erfassung des dem primären Bedienereignis nachfolgenden sekundären Bedienereignisses die Sitzreihe 9, die an den Laderaum 3a angrenzt. Zusätzlich kann es auch vorgesehen sein, dass die weitere Sitzreihe oder alle Sitzreihen 9 auf die Erfassung des sekundären Bedienereignisses hin motorisch bewegt, insbesondere umgelegt werden.

Bei dem dargestellten und insoweit bevorzugten Ausführungsbeispiel ist wie oben angesprochen lediglich eine Sitzreihe 9 vorgesehen, die in Fahrzeuglängsrichtung 13 versetzt zu den Laderaumkomponenten 7a eines Fahrersitzes 20 und eines Beifahrersitzes 21 angeordnet ist. Hier kann es auch vorteilhaft sein, dass der Beifahrersitz 21 insgesamt in Fahrzeuglängsrichtung 13, also nach vorne, verstellt wird, und/oder, dass dessen Rückenlehne 22 motorisch entriegelt oder bewegt, insbesondere umgeklappt wird, und/oder, dass dessen Kopfstütze 23 motorisch entriegelt oder bewegt wird, sofern das dem primären Bedienereignis nachfolgende sekundäre Bedienereignis von der Steuerungsanordnung 6 erfasst worden ist. Die hierfür erforderlichen Antriebe sind in Fig. 1 der Übersichtlichkeit halber nicht dargestellt.

Bei der auf die Erfassung des sekundären Bedienereignisses motorisch verstellbaren Laderaumkomponente 7 kann es sich auch um eine nicht dargestellte Laderaumabdeckung handeln, die motorisch in eine Offenstellung bewegbar ist. Bei der Erfassung des dem primären Bedienereignis nachfolgenden sekundären Bedienereignisses fährt die Steuerungsanordnung 6 die Laderaumabdeckung dann vorzugsweise in die Offenstellung, so dass die Zugänglichkeit des Laderaums 3a erhöht wird.

Anstelle der Erweiterung des Laderaums 3a kann die vorschlagsgemäße, motorische Verstellung der jeweiligen Laderaumkomponente 7 auch der besseren Beladbarkeit dienen. Hier ist die betreffende Laderaumkomponente 7 ein nicht dargestellter Laderaumboden, der motorisch aus einer dem Verschlusselement 4 zugeordneten Karosserieöffnung 24 in eine Beladestellung ausfahrbar ist, wobei bei der Erfassung des dem primären Bedienereignis nachfolgenden sekundären Bedienereignisses die Steuerungsanordnung 6 den Laderaumboden in die Beladestellung ausfährt. Damit bleibt es dem Bediener erspart, den ggf. schwergewichtigen zu beladenden Gegenstand in einer auskragenden Bewegung in den Laderaum 3a heben zu müssen. Auch hierdurch ergibt sich eine entsprechende Steigerung des Bedienkomforts.

Es darf noch darauf hingewiesen werden, dass es sich bei der auf die Erfassung des sekundären Bedienereignisses motorisch verstellbaren Laderaumkomponente 7 auch um andere Komponenten handeln kann, beispielsweise um ein Schiebedach oder ein Panoramadach, so dass bei der Erfassung des dem primären Bedienereignis nachfolgenden sekundären Bedienereignisses die Zuladung insbesondere langer sperriger Gegenstände vereinfacht wird.

Vorzugsweise sind die Bediener-Bewegungszyklen des primären Bedienereignisses und des sekundären Bedienereignisses unterschiedlich definiert und mittels der Steuerungsanordnung 6 voneinander unterscheidbar. Beispielsweise können die unterscheidbaren Bediener-Bewegungszyklen unterschiedliche Bewegungsrichtungen umfassen. Durch die Unterscheidbarkeit der Bedienereignisse lassen sich Fehlbedienungen auf ein Minimum reduzieren.

Alternativ kann es aber auch vorgesehen sein, dass die Bediener-Bewegungszyklen des primären Bedienereignisses und des sekundären Bedienereignisses identisch zueinander definiert sind. Dies bedeutet für den Bediener, dass für die motorische Verstellung der jeweiligen Laderaumkomponente 7 lediglich ein und derselbe Bediener-Bewegungszyklus wiederholt werden muss. Dies führt zu einem hohen Bedienkomfort, da es nicht erforderlich ist, dass der Bediener mehrere Bediener-Bewegungszyklen "lernt".

Der Bediener-Bewegungszyklus des primären Bedienereignisses und/oder des sekundären Bedienereignisses ist vorzugsweise als eine Bewegung eines Körperteils, insbesondere eines Fußes 25, des Bedieners definiert. Dies ist den Fig. 2 und 3 zu entnehmen. Hier und vorzugsweise ist der Bediener-Bewegungszyklus des primären Bedienereignisses und/oder des sekundären Bedienereignisses als eine Hin- und Rückbewegung des Körperteils, insbesondere eines Fußes 25, des Bedieners, definiert.

Dabei ist zu berücksichtigen, dass bei der jeweiligen Fußbewegung nicht notwendigerweise der Fuß 25 selbst von dem Bedienereignissensor 5 erfasst werden muss. Es reicht grundsätzlich aus, eine entsprechende Erfassung des Beins des Benutzers im Ganzen vorzunehmen.

Die obige Hin- und Rückbewegung kann grundsätzlich als sogenannte Kickbewegung vorgesehen sein, die im Wesentlichen quer zu der Fahrzeugaußenfläche vorgenommen wird. Es kann sich aber auch um eine sogenannte Wischbewegung handeln, die längs der Fahrzeugaußenfläche vorgenommen wird. Andere Trajektorien des Bediener-Bewegungszyklus sind denkbar. Beispiele hierfür sind kreisartige Bewegungszyklen, vertikal verlaufende Bewegungszyklen (Aufstampfen) o. dgl..

Eine besonders hohe Flexibilität in der Bedienung des Steuersystems 1 ergibt sich dadurch, dass das sekundäre Bedienereignis in einer bevorzugten Ausführungsform in mindestens zwei Varianten definiert ist, wobei die Steuerungsanordnung 6 in Abhängigkeit davon, welche Variante des sekundären Bedienereignisses erfasst worden ist, eine unterschiedliche Verstellung der mindestens einen Laderaumkomponente 7 vornimmt.

Die obige Definition des sekundären Bedienereignisses in mindestens zwei Varianten ist besonders vorteilhaft anwendbar auf eine Sitzanordnung 8, deren Rückenlehne 12 geteilt ist und eine linke Teilrückenlehne und eine rechte Teilrückenlehne aufweist, wobei die Teilrückenlehnen jeweils motorisch verstellbar sind. Hier bewegt die Steuerungsanordnung 6 in Abhängigkeit davon, welche Variante des sekundären Bedienereignisses erfasst worden ist, die linke Teilrückenlehne oder die rechte Teilrückenlehne.

Besonders intuitiv ergibt sich die obige Betätigung der Teilrückenlehnen nach einer weiteren bevorzugten Ausgestaltung dadurch, dass die erste Variante des sekundären Bedienereignisses als eine Wischbewegung nach links und die zweite Variante des sekundären Bedienereignisses als Wischbewegung nach rechts definiert ist, jeweils bezogen auf die Fahrzeuglängsrichtung 13.

Die Erfassung der ersten Variante des sekundären Bedienereignisses führt dann zu der motorischen Bewegung, insbesondere dem Umklappen der linken Teilrückenlehne, während die Erfassung der zweiten Variante des sekundären Bedienereignisses eine motorische Bewegung der rechten Teilrückenlehne, insbesondere ein Umklappen der rechten Teilrückenlehne, über die Steuerungsanordnung 6 auslöst.

Es darf darauf hingewiesen werden, dass eine Reaktion der Steuerungsanordnung 6 auf weitere Bedienereignisse, die der Erfassung des sekundären Bedienereignisses folgen, vorgesehen sein kann. Der Übersichtlichkeit halber ist vorliegend nur die Rede von zwei Bedienereignissen, nämlich dem primären Bedienereignis und dem sekundären Bedienereignis.

Für die Ausgestaltung des Bedienereignissensors 5 sind zahlreiche vorteilhafte Varianten denkbar. Hier und vorzugsweise ist der Bedienereignissensor 5 als Abstandssensor ausgestaltet. Denkbar ist, dass der Bedienereignissensor 5 alternativ als bildgebender Sensor, insbesondere als kamerabasierter Sensor ausgestaltet ist.

Der Bedienereignissensor 5 ist hier und vorzugsweise länglich und quer zu seiner Längserstreckung 26 abstandsmessend ausgestaltet. Bei dem in Fig. 1 dargestellten und insoweit bevorzugten Ausführungsbeispiel handelt es sich bei dem Abstandssensor um einen kapazitiv messenden Sensor mit zwei länglichen Messelektroden 5a, 5b, was einen einfachen Aufbau und eine hohe Robustheit insbesondere gegenüber Umwelteinflüssen wie Feuchtigkeit, Verschmutzung o. dgl. erlaubt.

Der Bedienereignissensor 5 ist, wie in Fig. 1 dargestellt, im montierten Zustand quer zu der Fahrzeuglängsrichtung 13 angeordnet. Insbesondere bei einem als Seiten-Schiebetür ausgestalteten Verschlusselement 4 kann es aber auch vorteilhaft sein, dass der Bedienereignissensor 5 im montierten Zustand entlang der Fahrzeuglängsrichtung 13 angeordnet ist.

In besonders bevorzugter Ausgestaltung ist der Bedienereignissensor 5 im montierten Zustand in oder an einem Karosseriebauteil, insbesondere in oder an einem unteren Verkleidungsteil 27, hier an einem Stoßfänger des Kraftfahrzeugs 3, angeordnet. Dabei erstreckt sich der längliche Bedienereignissensor 5 insbesondere im Wesentlichen horizontal, so dass der Bediener das Bedienereignis an verschiedenen Stellen entlang des Kraftfahrzeugs 3 ausführen kann.

Nach einer weiteren Lehre, der eigenständige Bedeutung zukommt, wird das Kraftfahrzeug 3 mit einem Laderaum 3a und einer motorisch verstellbaren Laderaumvorrichtung 2 sowie einem der Laderaumvorrichtung 2 zugeordneten, vorschlagsgemäßen Steuersystem 1 als solches beansprucht. Auf alle Ausführungen zu dem vorschlagsgemäßen Steuersystem 1, die geeignet sind, das Kraftfahrzeug 3 als solches zu erläutern, darf in vollem Umfange verwiesen werden.

Nach einer weiteren Lehre, der ebenfalls eigenständige Bedeutung zukommt, wird das Verfahren für die Ansteuerung einer motorisch verstellbaren Laderaumvorrichtung 2 eines Kraftfahrzeugs 3 als solches beansprucht.

Das vorschlagsgemäße Verfahren findet Anwendung auf eine Laderaumvorrichtung 2, die wie oben erläutert ein motorisch verstellbares Verschlusselement 4 aufweist, wobei zur berührungslosen Erfassung von Bedienereignissen in Form von Bediener-Bewegungszyklen ein Bedienereignissensor 5, hier und vorzugsweise ein Abstandssensor, vorgesehen ist.

Vorschlagsgemäß wird der Bedienereignissensor 5, wie ebenfalls im Zusammenhang mit dem vorschlagsgemäßen Steuersystem 1 erläutert, daraufhin überwacht, ob ein vorbestimmtes Bedienereignis vorliegt, wobei bei der Erfassung eines solchen vorbestimmten Bedienereignisses die Laderaumvorrichtung 2 motorisch verstellt wird. Auch hier ist es vorgesehen, dass bei der Erfassung eines primären Bedienereignisses das Verschlusselement 4 motorisch in Öffnungsrichtung verstellt wird.

Wesentlich nach dem vorschlagsgemäßen Verfahren ist, dass die Laderaumvorrichtung 2 mindestens eine motorisch verstellbare Laderaumkomponente 7 aufweist und dass bei der Erfassung eines dem primären Bedienereignis nachfolgenden sekundären Bedienereignisses mindestens eine solche Laderaumkomponente 7 motorisch verstellt wird.

Das vorschlagsgemäße Verfahren spiegelt die Betriebsweise des vorschlagsgemäßen Steuersystems 1 wider, so dass zur Erläuterung des vorschlagsgemäßen Verfahrens in vollem Umfange auf die Erläuterungen zu der Betriebsweise des vorschlagsgemäßen Steuersystems 1 verwiesen werden darf.

## Patentansprüche

1. Steuersystem für eine motorisch verstellbare Laderaumvorrichtung (2) eines Kraftfahrzeugs (3), wobei die Laderaumvorrichtung (2) ein motorisch verstellbares Verschlusselement (4) aufweist, wobei zur berührungslosen Erfassung von Bedienereignissen in Form von Bediener-Bewegungszyklen ein Bedienereignissensor (5), insbesondere ein Abstandssensor, vorgesehen ist, wobei eine Steuerungsanordnung (6) den Bedienereignissensor (5) daraufhin überwacht, ob ein vorbestimmtes Bedienereignis vorliegt, und bei der Erfassung eines solchen vorbestimmten Bedienereignisses die Laderaumvorrichtung (2) motorisch verstellt, wobei die Steuerungsanordnung (6) bei der auf den Bedienereignissensor (5) zurückgehenden Erfassung eines primären Bedienereignisses das Verschlusselement (4) motorisch in Öffhungsrichtung verstellt,
**dadurch gekennzeichnet,**
**dass** die Laderaumvorrichtung (2) mindestens eine motorisch verstellbare Laderaumkomponente (7) aufweist und dass die Steuerungsanordnung (6) bei der auf den Bedienereignissensor (5) zurückgehenden Erfassung eines dem primären Bedienereignis nachfolgenden, sekundären Bedienereignisses mindestens eine solche Laderaumkomponente (7) motorisch verstellt.

2. Steuersystem nach Anspruch 1, **dadurch gekennzeichnet, dass** die Steuerungsanordnung (6) die Laderaumkomponente (7) bei der Erfassung des sekundären Bedienereignisses nur unter der Bedingung verstellt, dass das sekundäre Bedienereignis innerhalb einer vorbestimmten Pausenzeit dem primären Bedienereignis nachfolgt.

3. Steuersystem nach Anspruch 1 oder 2, **dadurch gekennzeichnet, dass** die Steuerungsanordnung (6) die Laderaumkomponente (7) bei der Erfassung des sekundären Bedienereignisses zur Vermeidung von Kollisionen nur unter der Bedingung verstellt, dass von der Steuerungsanordnung (6) ein Freigabezustand erfasst worden ist, vorzugsweise, dass die Erfassung des Freigabezustands eine Abfrage mindestens eines Zustandssensors umfasst, weiter vorzugsweise, dass die Erfassung des Freigabezustands eine Abfrage eines Sitzbelegungssensors und/oder eines Gurtschlosssensors und/oder eines Innenraumüberwachungssensors umfasst.

4. Steuersystem nach einem der vorhergehenden Ansprüche, **dadurch gekennzeichnet, dass** die mittels der Steuerungsanordnung (6) verstellbare Laderaumkomponente (7) eine Sitzanordnung (8), insbesondere eine Sitzreihe (9), mit einem Sitzteil (10), insbesondere einer Sitzbank (11), und mit einer Rückenlehne (12) aufweist und dass die Sitzanordnung (8) insgesamt oder abschnittsweise motorisch entriegelbar oder bewegbar ist, und/oder, dass die Rückenlehne (12) der Sitzanordnung (8) insgesamt oder abschnittsweise motorisch entriegelbar oder bewegbar ist, und/oder, dass die Rückenlehne (12) eine Durchlade (16) aufweist, die motorisch entriegelbar oder bewegbar ist, und/oder, dass die Rückenlehne (12) mindestens eine Kopfstütze (23) aufweist, die motorisch entriegelbar oder bewegbar ist.

5. Steuersystem nach einem der vorhergehenden Ansprüche, **dadurch gekennzeichnet, dass** bei der Erfassung des dem primären Bedienereignis nachfolgenden sekundären Bedienereignisses die Steuerungsanordnung (6) die Sitzanordnung (8) insgesamt oder abschnittsweise motorisch entriegelt oder bewegt, und/oder, die Rückenlehne (12) der Sitzanordnung (8) insgesamt oder abschnittsweise motorisch entriegelt oder bewegt, und/oder, die Durchlade (16) motorisch entriegelt oder bewegt, und/oder, die mindestens eine Kopfstütze (23) motorisch entriegelt oder bewegt.

6. Steuersystem nach einem der vorhergehenden Ansprüche, **dadurch gekennzeichnet, dass** bei der Erfassung des dem primären Bedienereignis nachfolgenden sekundären Bedienereignisses die Steuerungsanordnung (6) die Verstellung der mindestens einen Laderaumkomponente (7) derart vornimmt, dass der Laderaum (3a) erweitert wird.

7. Steuersystem nach einem der Ansprüche 1 bis 3 oder 6, **dadurch gekennzeichnet, dass** die Laderaumkomponente (7) eine Laderaumabdeckung ist, die motorisch in eine Offenstellung bewegbar ist und dass bei der Erfassung des dem primären Bedienereignis nachfolgenden sekundären Bedienereignisses die Steuerungsanordnung (6) die Laderaumabdeckung in die Offenstellung ausfährt, und/oder, dass die Laderaumkomponente (7) ein Laderaumboden ist, der motorisch aus einer dem Verschlusselement (4) zugeordneten Karosserieöffnung (24) in eine Beladestellung ausfahrbar ist und dass bei der Erfassung des dem primären Bedienereignis nachfolgenden sekundären Bedienereignisses die Steuerungsanordnung (6) den Laderaumboden in die Beladestellung ausfährt.

8. Steuersystem nach einem der vorhergehenden Ansprüche, **dadurch gekennzeichnet, dass** die Bediener-Bewegungszyklen des primären Bedienereignisses und des sekundären Bedienereignisses unterschiedlich definiert und mittels der Steuerungsanordnung (6) voneinander unterscheidbar sind,

9. Steuersystem nach einem der Ansprüche 1 bis 7, **dadurch gekennzeichnet, dass** die Bediener-Bewegungszyklen des primären Bedienereignisses und des sekundären Bedienereignisses identisch zueinander definiert sind.

10. Steuersystem nach einem der vorhergehenden Ansprüche, **dadurch gekennzeichnet, dass** der Bediener-Bewegungszyklus des primären Bedienereignisses und/oder des sekundären Bedienereignisses als eine Bewegung eines Körperteils, insbesondere eines Fußes, des Bedieners definiert ist bzw. sind.

11. Steuersystem nach Anspruch 10, **dadurch gekennzeichnet, dass** der Bediener-Bewegungszyklus des primären Bedienereignisses und/oder des sekundären Bedienereignisses als eine Hin- und Rückbewegung eines Körperteils, insbesondere eines Fußes, des Bedieners definiert ist.

12. Steuersystem nach einem der vorhergehenden Ansprüche, **dadurch gekennzeichnet, dass** das sekundäre Bedienereignis in mindestens zwei Varianten definiert ist und dass die Steuerungsanordnung (6) in Abhängigkeit davon, welche Variante des sekundären Bedienereignisses erfasst worden ist, eine unterschiedliche Verstellung der mindestens einen Laderaumkomponente (7) vornimmt.

13. Steuersystem nach Anspruch 12, **dadurch gekennzeichnet, dass** die Rückenlehne (12) der Sitzanordnung (8) geteilt ist und eine linke Teilrückenlehne und eine rechte Teilrückenlehne aufweist, die jeweils motorisch verstellbar sind und dass die Steuerungsanordnung (6) in Abhängigkeit davon, welche Variante des sekundären Bedienereignisses erfasst worden ist, die linke Teilrückenlehne oder die rechte Teilrückenlehne bewegt.

14. Steuersystem nach einem der vorhergehenden Ansprüche, **dadurch gekennzeichnet, dass** der Bedienereignissensor (5), insbesondere der Abstandssensor, länglich und quer zu seiner Längserstreckung (26) abstandsmessend ausgestaltet ist, vorzugsweise, dass der Bedienereignissensor (5) im montierten Zustand in oder an einem Karosseriebauteil, insbesondere in oder an einem unteren Verkleidungsteil (27), des Kraftfahrzeugs (3) angeordnet ist.

15. Kraftfahrzeug mit einer motorisch verstellbaren Laderaumvorrichtung (2) und mit einem der Laderaumvorrichtung (2) zugeordneten Steuersystem (1) nach einem der vorhergehenden Ansprüche.

16. Verfahren für die Ansteuerung einer motorisch verstellbaren Laderaumvorrichtung (2) eines Kraftfahrzeugs (3), wobei die Laderaumvorrichtung (2) ein motorisch verstellbares Verschlusselement (4) aufweist, wobei zur berührungslosen Erfassung von Bedienereignissen in Form von Bediener-Bewegungszyklen ein Bedienereignissensor (5), insbesondere ein Abstandssensor, vorgesehen ist, wobei der Bedienereignissensor (5) daraufhin überwacht wird, ob ein vorbestimmtes Bedienereignis vorliegt, und bei der Erfassung eines solchen vorbestimmten Bedienereignisses die Laderaumvorrichtung (2) motorisch verstellt wird, wobei bei der Erfassung eines primären Bedienereignisses das Verschlusselement (4) motorisch in Öffnungsrichtung verstellt wird,
**dadurch gekennzeichnet,**
**dass** die Laderaumvorrichtung (2) mindestens eine motorisch verstellbare Laderaumkomponente (7) aufweist und dass bei der Erfassung eines dem primären Bedienereignis nachfolgenden, sekundären Bedienereignisses mindestens eine solche Laderaumkomponente (7) motorisch verstellt wird.

## Claims

1. Control system for a motor-adjustable luggage compartment device (2) of a motor vehicle (3), wherein the luggage compartment device (2) has a motor-adjustable closure element (4), wherein an operating event sensor (5), in particular a distance sensor, is provided for the non-contact detection of operating events in the form of operator movement cycles, wherein a control arrangement (6) monitors the operating event sensor (5) to see whether a predetermined operating event is present, and upon the detection of such a predetermined operating event, adjusts the luggage compartment device (2) by a motor, wherein upon the detection of a primary operating event on the basis of the operating event sensor (5), the control arrangement (6) adjusts the closure element (4) by a motor in the opening direction,
**characterized in that**
the luggage compartment device (2) has at least one motor-adjustable luggage compartment component (7), and **in that** upon the detection of a secondary operating event following the primary operating event on the basis of the operating event sensor (5), the control arrangement (6) adjusts at least one such luggage compartment component (7) by a motor.

2. Control system according to Claim 1, **characterized in that** upon the detection of the secondary operating event, the control arrangement (6) adjusts the luggage compartment component (7) only under the condition that the secondary operating event follows the primary operating event within a predetermined pause time.

3. Control system according to Claim 1 or 2, **characterized in that** in order to avoid collisions, upon the detection of the secondary operating event, the control arrangement (6) adjusts the luggage compartment component (7) only under the condition that a release state has been detected by the control arrangement (6), preferably **in that** the detection of the release state comprises interrogating at least one state sensor, further preferably that the detection of the release state comprises interrogating a seat occupancy sensor and/or a buckle sensor and/or an interior monitoring sensor.

4. Control system according to one of the preceding claims, **characterized in that** the luggage compartment component (7) adjustable by means of the control arrangement (6) has a seat arrangement (8), in particular a row of seats (9) having a seat part (10), in particular a seat bench (11), and having a backrest (12), and **in that** the seat arrangement (8) can be unlocked or moved overall or in sections by a motor, and/or **in that** the backrest (12) of the seat arrangement (8) can be unlocked or moved overall or in sections by a motor, and/or **in that** the backrest (12) has a load-through facility (16), which can be unlocked or moved by a motor, and/or **in that** the backrest (12) has at least one headrest (23), which can be unlocked or moved by a motor.

5. Control system according to one of the preceding claims, **characterized in that** upon the detection of the secondary operating event following the primary operating event, the control arrangement (6) unlocks or moves the seat arrangement (8) overall or in sections by a motor, and/or unlocks or moves the backrest (12) of the seat arrangement (8) overall or in sections by a motor, and/or unlocks or moves the load-through facility (16) via a motor, and/or unlocks or moves the at least one headrest (23) by a motor.

6. Control system according to one of the preceding claims, **characterized in that** upon the detection of the secondary operating event following the primary operating event, the control arrangement (6) performs the adjustment of the at least one luggage compartment component (7) in such a way that the luggage compartment (3a) is extended.

7. Control system according to one of Claims 1 to 3 or 6, **characterized in that** the luggage compartment component (7) is a luggage compartment cover, which can be moved by a motor into an open position, and **in that** upon the detection of the secondary operating event following the primary operating event, the control arrangement (6) moves the luggage compartment cover into the open position, and/or **in that** the luggage compartment component (7) is a luggage compartment floor, which can be moved by a motor out of a body opening (24) associated with the closure element (4) into a loading position, and **in that** upon the detection of the secondary operating event following the primary operating event, the control arrangement (6) moves the luggage compartment floor into the loading position.

8. Control system according to one of the preceding claims, **characterized in that** the operator movement cycles of the primary operating event and of the secondary operating event are defined differently and can be distinguished from each other by means of the control arrangement (6).

9. Control system according to one of Claims 1 to 7, **characterized in that** the operator movement cycles of the primary operating event and of the secondary operating event are defined identically to each other.

10. Control system according to one of the preceding claims, **characterized in that** the operator movement cycle of the primary operating event and/or of the secondary operating event is or are defined as a movement of a body part, in particular of a foot, of the operator.

11. Control system according to Claim 10, **characterized in that** the operator movement cycle of the primary operating event and/or of the secondary operating event is defined as a to and fro movement of a body part, in particular of a foot, of the operator.

12. Control system according to one of the preceding claims, **characterized in that** the secondary operating event is defined in at least two variants, and **in that**, depending on which variant of the secondary operating event has been detected, the control arrangement (6) performs a different adjustment of the at least one luggage compartment component (7).

13. Control system according to Claim 12, **characterized in that** the backrest (12) of the seat arrangement (8) is divided and has a left-hand part backrest and a right-hand part backrest, which are each motor-adjustable, and **in that**; depending on which variant of the secondary operating event has been detected, the control arrangement (6) moves the left-hand part backrest or the right-hand part backrest.

14. Control system according to one of the preceding claims, **characterized in that** the operating event sensor (5), in particular the distance sensor, is configured to be elongated and to measure distance transverse to its longitudinal extent (26), preferably **in that** the operating event sensor (5), when installed, is arranged in or on a bodywork component, in particular in or on a lower cladding part (27), of the motor vehicle (3).

15. Motor vehicle having a motor-adjustable luggage compartment device (2) and having a control system (1) according to one of the preceding claims assigned to the luggage compartment device (2).

16. Method for activating a motor-adjustable luggage compartment device (2) of a motor vehicle (3), wherein the luggage compartment device (2) has a motor-adjustable closure element (4), wherein an operating event sensor (5), in particular a distance sensor, is provided for the non-contact detection of operating events in the form of operator movement cycles, wherein the operating event sensor (5) is monitored to see whether a predetermined operating event is present, and upon the detection of such a predetermined operating event, the luggage compartment device (2) is adjusted by a motor, wherein upon the detection of a primary operating event, the closure element (4) is adjusted by a motor in an opening direction,
**characterized in that**
the luggage compartment device (2) has at least one motor-adjustable luggage compartment component (7) and **in that** upon the detection of an secondary operating event following the primary operating event, at least one such luggage compartment component (7) is adjusted by a motor.

## Revendications

1. Système de commande d'un dispositif de compartiment de chargement (2) déplaçable de manière motorisée d'un véhicule automobile (3), dans lequel le dispositif de compartiment de chargement (2) comporte un élément de fermeture (4) déplaçable de manière motorisée, dans lequel un capteur d'événements d'opérateur (5), notamment un capteur de distance, est prévu pour la détection sans contact d'événements d'opérateur sous la forme de cycles de mouvement d'opérateur, dans lequel un ensemble de commande (6) surveille le capteur d'événements d'opérateur (5) pour déterminer si un événement d'opérateur prédéterminé se produit et, lors de la détection d'un événement d'opérateur prédéterminé de ce type, déplace le dispositif de compartiment de chargement (2) de manière motorisée, dans lequel l'ensemble de commande (6), lors de la détection en retour d'un événement d'opérateur primaire par le capteur d'événements d'opérateur (5), déplace l'élément de fermeture (4) de manière motorisée dans la direction d'ouverture,
**caractérisé en ce que** le dispositif de compartiment de chargement (2) comporte au moins un composant de compartiment de chargement (7) déplaçable de manière motorisée, et **en ce que** l'ensemble de commande (6) déplace de manière motorisée au moins un composant de compartiment de chargement (7) de ce type lors de la détection provenant du capteur d'événements d'opérateur (5) d'un événement d'opérateur secondaire qui survient après l'événement d'opérateur primaire.

2. Système de commande selon la revendication 1, **caractérisé en ce que** l'ensemble de commande (6) ne déplace le composant de compartiment de chargement (7) lors de la détection de l'événement d'opérateur secondaire, que dans la mesure où l'événement d'opérateur secondaire survient après l'événement d'opérateur primaire au cours d'un temps de pause prédéterminé.

3. Système de commande selon la revendication 1 ou 2, **caractérisé en ce que** l'ensemble de commande (6) déplace le composant de compartiment de chargement (7), lors de la détection de l'événement d'opérateur secondaire afin d'éviter des collisions, uniquement dans la mesure où un état de déclenchement a été détecté par l'ensemble de commande (6), de préférence, dans la mesure où la détection de l'état de déclenchement comprend une interrogation d'au moins un capteur d'état, plus préférablement, dans la mesure où la détection de l'état de déclenchement comprend une interrogation d'un capteur d'occupation de siège et/ou d'un capteur de bouclage de ceinture et/ou d'un capteur de surveillance d'habitacle.

4. Système de commande selon l'une des revendications précédentes, **caractérisé en ce que** le composant de compartiment de chargement (7) déplaçable au moyen de l'ensemble de commande (6) comporte un ensemble d'assise (8), notamment une rangée de sièges (9), avec une partie de siège (10), notamment un banc (11) et avec un dossier (12) et **en ce que** l'ensemble d'assise (8) peut être déverrouillé ou déplacé de manière motorisée dans son ensemble ou par sections, et/ou **en ce que** le dossier (12) de l'ensemble d'assise (8) peut être déverrouillé ou déplacé de manière motorisée dans son ensemble ou par sections, et/ou **en ce que** le dossier (12) comporte une charge traversante (16) qui peut être déverrouillée ou déplacée de manière motorisée, et/ou **en ce que** le dossier (12) comporte au moins un appuie-tête (23) qui peut être déverrouillé ou déplacé de manière motorisée.

5. Système de commande selon l'une des revendications précédentes, **caractérisé en ce que**, lors de la détection de l'événement d'opérateur secondaire qui survient après l'événement d'opérateur primaire, l'ensemble de commande (6) déverrouille ou déplace de manière motorisée le dispositif d'assise (8) dans son ensemble ou par sections, et/ou le dossier (12) de l'ensemble d'assise (8) est déverrouillé ou déplacé de manière motorisée dans son ensemble ou par sections, et/ou la charge traversante (16) est déverrouillée ou déplacée de manière motorisée, et/ou déverrouille ou déplace de manière motorisée ledit au moins un appuie-tête (23).

6. Système de commande selon l'une des revendications précédentes, **caractérisé en ce que**, lors de la détection de l'événement d'opérateur secondaire qui survient après l'événement d'opérateur primaire, l'ensemble de commande (6) effectue le déplacement dudit au moins un composant de compartiment de chargement (7) de manière à élargir le compartiment de chargement (3a).

7. Système de commande selon l'une des revendications 1 à 3 ou 6, **caractérisé en ce que** le composant de compartiment de chargement (7) est un capot de compartiment de chargement qui peut être déplacé de manière motorisée en position ouverte et **en ce que**, lors de la détection l'événement d'opérateur secondaire qui survient après l'événement primaire, l'ensemble de commande (6) déploie le capot de compartiment de chargement en position ouverte, et/ou **en ce que** l'élément de compartiment de chargement (7) est un plancher de compartiment de chargement qui peut être déployé de manière motorisée vers une position de chargement à partir d'une ouverture de carrosserie (24) associée à l'élément de fermeture (4), et **en ce que**, lors de la détection de l'événement d'opérateur secondaire qui survient après l'événement d'opérateur primaire, l'ensemble de commande (6) déploie le plancher du compartiment de chargement en position de chargement.

8. Système de commande selon l'une des revendications précédentes, **caractérisé en ce que** les cycles de mouvement d'opérateur de l'événement d'opérateur primaire et de l'événement d'opérateur secondaire sont définis différemment et peuvent être distingués les uns des autres au moyen de l'ensemble de commande (6).

9. Système de commande selon l'une des revendications 1 à 7, **caractérisé en ce que** les cycles de mouvement d'opérateur de l'événement d'opérateur primaire et de l'événement d'opérateur secondaire sont définis de manière identique les uns aux autres.

10. Système de commande selon l'une des revendications précédentes, **caractérisé en ce que** le cycle de mouvement d'opérateur de l'événement d'opérateur primaire et/ou de l'événement d'opérateur secondaire est défini comme étant un mouvement d'une partie du corps, en particulier d'un pied, de l'opérateur.

11. Système de commande selon la revendication 10, **caractérisé en ce que** le cycle mouvement d'opérateur de l'événement d'opérateur primaire et/ou de l'événement d'opérateur secondaire est défini comme étant un mouvement vers l'avant et vers l'arrière d'une partie du corps, en particulier d'un pied, de l'opérateur.

12. Système de commande selon l'une des revendications précédentes, **caractérisé en ce que** l'événement d'opérateur secondaire est défini selon au moins deux variantes et **en ce que** l'ensemble de commande (6) effectue un déplacement différent dudit au moins un composant de compartiment de chargement (7) selon la variante de l'événement d'opérateur secondaire qui a été détectée.

13. Système de commande selon la revendication 12, **caractérisé en ce que** le dossier (12) de l'ensemble d'assise (8) est divisé et comporte un dossier partiel gauche et un dossier partiel droit, qui sont respectivement déplaçables de manière motorisée, et **en ce que** l'ensemble de commande (6) actionne le dossier partiel gauche ou le dossier partiel droit selon la variante de l'événement d'opérateur secondaire qui a été détectée.

14. Système de commande selon l'une des revendications précédentes, **caractérisé en ce que** le capteur d'événements d'opérateur (5), en particulier le capteur de distance, est conçu pour mesurer des distances longitudinalement et transversalement à son étendue longitudinale (26), de préférence **en ce que** le capteur d'événements d'opérateur (5) est disposé, à l'état monté, dans ou sur une partie de caisse, notamment dans ou sur une partie de revêtement inférieure (27) du véhicule automobile (3).

15. Véhicule automobile comportant un dispositif de compartiment de chargement (2) déplaçable de manière motorisée et un ensemble de commande (1) associé au dispositif de compartiment de chargement (2) selon l'une des revendications précédentes.

16. Procédé de commande d'un dispositif de compartiment de chargement (2) déplaçable de manière motorisée d'un véhicule automobile (3), dans lequel le dispositif de compartiment de chargement (2) comporte un élément de fermeture (4) déplaçable de manière motorisée, dans lequel un capteur d'événements d'opérateur (5), notamment un capteur de distance, est prévu pour la détection sans contact d'événements d'opérateur sous la forme de cycles de mouvement d'opérateur, dans lequel le capteur d'événements d'opérateur (5) est surveillé pour déterminer si un événement d'opérateur prédéterminé se produit et, lors de la détection d'un événement d'opérateur prédéterminé de ce type, le dispositif de compartiment de chargement (2) est déplacé de manière motorisée, dans lequel, lors de la détection d'un événement d'opérateur primaire, l'élément de fermeture (4) est déplacé de manière motorisée dans la direction d'ouverture,
**caractérisé en ce que** le dispositif de compartiment de chargement (2) comporte au moins un composant de compartiment de chargement (7) déplaçable de manière motorisée, et **en ce qu'**au moins un composant de compartiment de chargement (7) de ce type est déplacé de manière motorisée lors de la détection d'un événement d'opérateur secondaire qui survient après l'événement d'opérateur primaire.
